# EUROPÄISCHE PATENTSCHRIFT

(11) **EP 1 854 524 B1**
(45) Veröffentlichungstag und Bekanntmachung des Hinweises auf die Patenterteilung: **16.05.2012**
(21) Anmeldenummer: 07006515.6
(22) Anmeldetag: 29.03.2007
(51) Int. Cl.: B01D 21/00, C02F 3/12

(54) **Abwasserreinigungsanlage mit verbesserter Belebtschlammabscheidung**
Wastewater purification plant with improved activated sludge separation
Installation de traitement d'eaux usées avec séparation de boues activées améliorée

(30) Priorität: 13.05.2006 DE 102006022466; 28.11.2006 DE 102006056036
(43) Veröffentlichungstag der Anmeldung: 14.11.2007
(73) Patentinhaber: WTE Wassertechnik GmbH, 45136 Essen (DE)
(72) Erfinder: Schröder, Reinhard, Dr., 45239 Essen (DE); Wotrubez, Herbert, 65552 Limburg (DE)
(74) Vertreter: Schulte, Jörg

(56) Entgegenhaltungen:
- WO-A-82/00134
- DE-A1- 4 329 239

## Beschreibung

Die Erfindung betrifft eine Anlage zur biologischen Abwasserreinigung in einem kreisrunden, das Abwasser-/Belebtschlammgemisch im Umlauf führenden und mit Rührwerken und Belüftern ausgerüsteten Belebungsbecken, wobei vor dessen Reinwasserablauf ein in einer Beruhigungszone hinter einer mit einer Zulauföffnung in Höhe der Lamellenplatten aufweisenden Trennwand und damit aus dem Bereich des im Umlauf geführten Abwasser-/Belebtschlammgemisches herausgenommener Schlammabscheider mit einer Vielzahl schräg gestellter Lamellenplatten angeordnet ist.

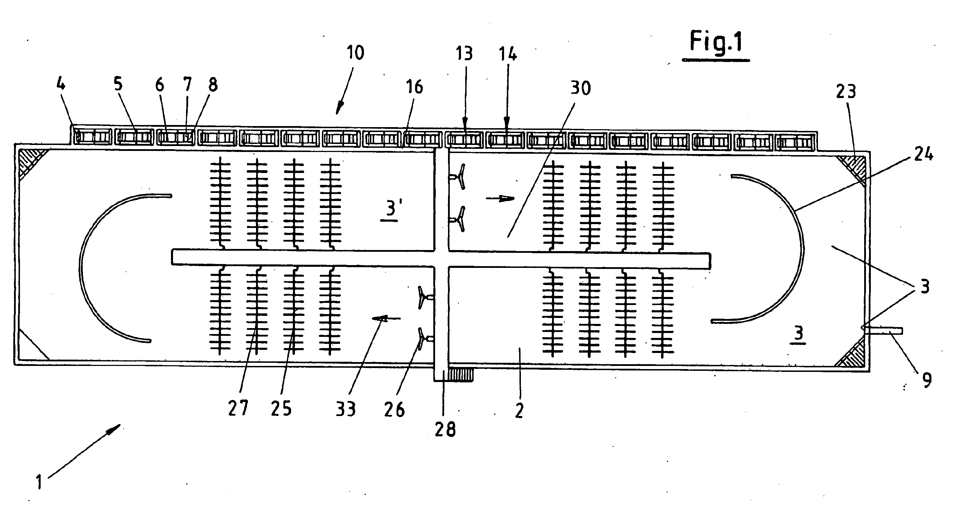

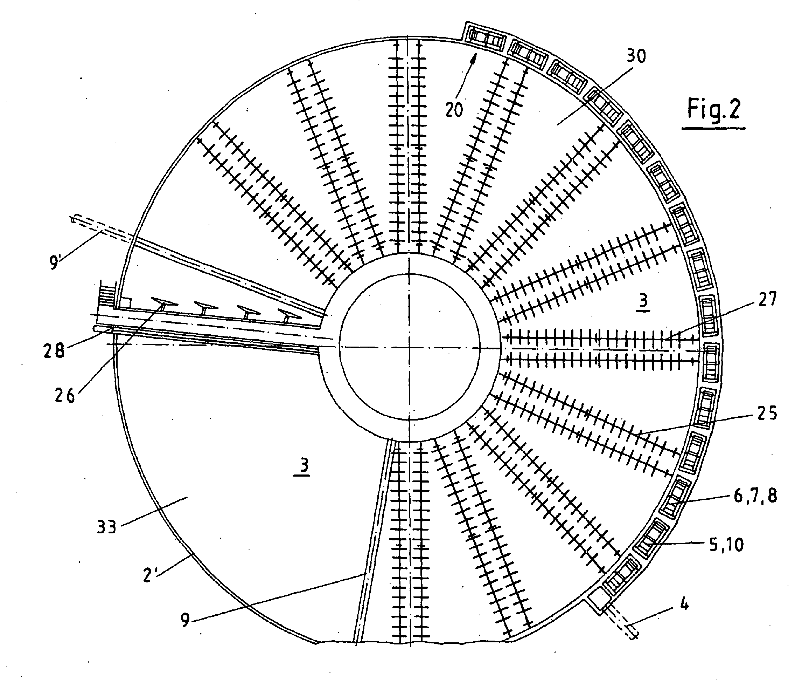

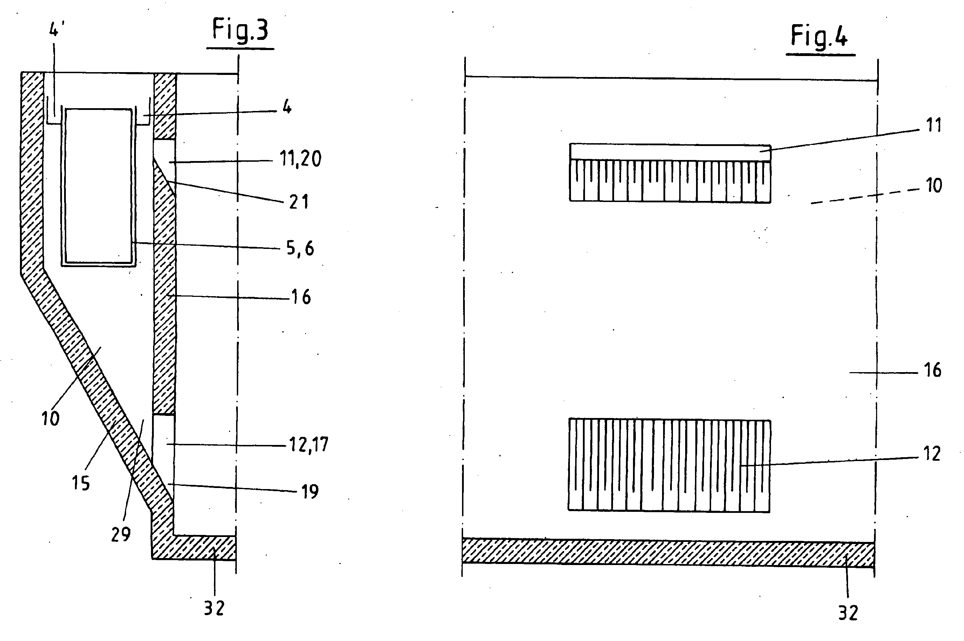

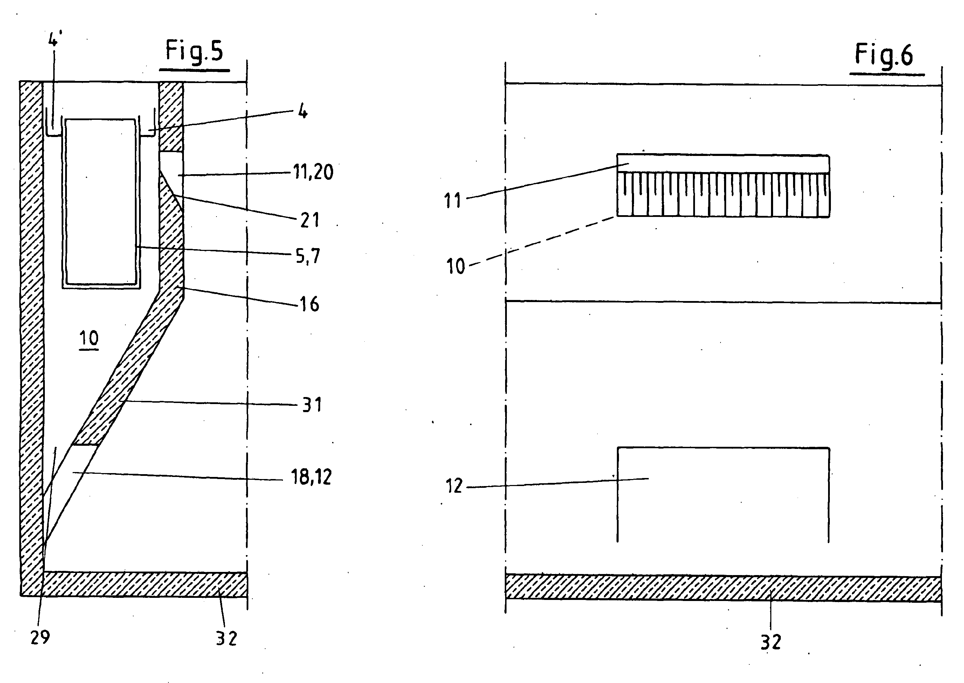

Aus der EP 0 890 553 A2 ist ein Verfahren zur biologischen Abwasserreinigung und eine entsprechende Anlage bekannt, bei der möglichst der gesamte Belebtschlamm in den Lamellenplatten aufgefangen und dann in das Belebungsbecken zurückgeführt wird. Dabei wird das ablaufende schlammhaltige Wasser nach der Belebtschlammbehandlung oder auch während der Belebtschlammbehandlung so zwischen den Lamellenplatten hindurchgeführt, dass sich der Schlamm darauf absetzt. Die Geschwindigkeit des Abwassers ist entsprechend reduziert. Um den Erfolg der Belebtschlammbehandlung sicherzustellen, wird dem Abwasser nicht nur Belebtschlamm zugeführt, sondern auch Sauerstoff, um so ein Wachstum der Bakterien zu ermöglichen. Außerdem wird das Abwasser während der Belebtschlammbehandlung durch ein rundes oder auch rechteckiges Belebungsbecken geführt und um ein Absetzen des Belebtschlammes im Belebungsbecken zum vermeiden, vor allem über Rührwerke oder ähnliche Antriebsmechanismen in Turbulenz versetzt und in Fließrichtung "vorwärts geschoben". All dies führt dazu, dass der Weg zwischen den Lamellenplatten so lang sein muss, dass ein Absetzen des Schlammes sichergestellt ist, wobei selbst dann noch Abscheideprobleme bestehen, weil durch das Belüftungssystem eingetragene Luftblasen mitgerissen oder sich Turbulenzen zwischen den Lamellenplatten fortsetzen, sodass der Abscheideerfolg ausgesprochen problematisch ist. Aus der DE 43 29 239 A1 ist es bekannt, am Ende eines rechteckigen Belebungsbeckens Lamellenplatten anzuordnen und den gesamten Abwasserstrom dadurch zu führen. Der Belebtschlamm wird auf den Lamellenplatten abgeschieden, wobei durch kontrollierte Luftzufuhr die Aufenthaltszeit des Schlammes in der Entmischungsstrecke gesteuert wird. Die "kontrollierte" Luftzufuhr soll dadurch erreicht werden, dass den Luftblasen aus dem Belüftungssystem im Belebungsbecken der Zugang zu den Lamellenplatten durch eine vorgeordnete Trennwand (Fig. 6) erschwert und den Lamellenplatten dafür gezielt über Belüftungsschienen o. Ä. Luftblasen in vorgegebener Menge zugeführt werden. Der Belebtschlamm wird so eingedickt, rutscht dann von den Lamellenplatten ab und bleibt vor den Lamellenplatten liegen. Es soll dadurch eine Erhöhung des Trockensubstanzgehaltes im Belebungsbecken möglich sein. Die Trennwand soll sowohl über- als auch unterströmt werden. Die WO82/00134 A zeigt eine Beruhigungszone mit Lamellenplatten, die am Ende des Belebungsbeckens angeordnet ist. Die Lamellenplatten können kreisförmig oder in Längsrichtung angeordnet werden. Diese Anordnung ist den Figuren 1 und 2 sowie dem Abstrakt zu entnehmen. Figur 4 zeigt ebenso wie Figur 9, dass im Zulaufbereich der Lamellenplatten eine Pumpe für das Absaugen des abrutschenden Schlammes angeordnet ist. Der abgerutschte Schlamm wird über die Pumpe in das Belebungsbecken zurückgepumpt.

Der Erfindung liegt daher die Aufgabe zugrunde, eine Abwasserreinigungsanlage so weiter zu entwickeln, dass ein immer ausreichendes Absetzen des Belebtschlammes auf den Lamellenplatten und nach dem Abrutschen von den Lamellenplatten ein sicherer Wiedereinsatz dieses Belebtschlammes gesichert ist.

Anlagenmäßig wird die Aufgabe durch die Lehre des Anspruches 1 gelöst.

Die Anlage wird also so ausgebildet, dass die Lamellenplatten nicht mehr im eigentlichen Strömungsweg des Abwassers oder Umlaufwassers angeordnet werden, sondern sie werden in separaten Beruhigungszonen angeordnet, deren Zulauf so ausgebildet und angeordnet ist, dass nur ein beruhigter Schlammwasserstrom in die Schlammabscheider hineingelangt, wo eine weitere Reduzierung von Turbulenzen in diesem Strom erfolgt, sodass beim Durchfließen zwischen den Lamellenplatten ein sicheres Absetzen des Schlammes auf diesen Lamellenplatten erfolgen kann. Dabei ist von großem Vorteil, dass der Strom des mit Schlamm beladenen Abwassers je nach Belastung so in die Beruhigungszone hineingeführt wird, dass beim Durchströmen der Lamellen keinerlei Turbulenzen mehr vorhanden sind (Laminare Strömung). Darüber hinaus ist sichergestellt, dass der abgerutschte Belebtschlamm über die schräge Bodenplatte der Beruhigungszone und die schräge Basiswandung der Öffnungen in der Trennwand zwischen Beruhigungszone und Belebungsbecken sicher wieder in den Abwasserbehandlungsprozess zurückgelangt. Der von den Lamellenplatten abrutschende Belebtschlamm kann sich also erst gar nicht auf der Bodenplatte der Beruhigungszone absetzen, sondern er rutscht sofort in Richtung Öffnungen in der Trennwand und kommt damit in den Bereich des im Belebungsbecken vorbei fließenden Umlaufwassers, das sich noch in der Belebtschlammbehandlung befindet und somit den Belebtschlamm gleich mit aufnimmt und zur Wirkung bringt. Auch im Bereich der Öffnungen in der Trennwand kann es nicht zu einem Rückstau von abrutschendem Belebtschlamm kommen, weil Bodenplatte und Basiswandung der Öffnungen die gleiche Neigung aufweisen.

Um ein vollständiges Abrutschen des auf den Lamellenplatten abgesetzten Belebtschlammes sicherzustellen, sieht die Erfindung vor, dass die Lamellenplatten eine Neigung von mindestens 55° aufweisend schräg gestellt sind. Es hat sich nämlich herausgestellt, dass bei beispielsweise 45° durchaus die Gefahr besteht, dass sich der Belebtschlamm aufbaut und dann den Spalt zwischen zwei Lamellenplatten also die Lamelle so ausfüllt, dass ein Verstopfen eintritt. Bei 55° und mehr erfolgt zwar auch noch ein Absetzen und Aufbauen einer gewissen Schicht, die aber dann aufgrund des Gewichtes und der Schrägstellung sehr schnell dazu neigt so abzurutschen, dass eine Beeinträchtigung des Abwasserstromes nicht eintritt, andererseits aber der Schlamm sicher in das Belebungsbecken zurückgelangt.

Das besagte Verstopfen des Spaltes zwischen zwei Lamellenplatten wird gemäß der Erfindung weiter dadurch vermieden, dass der Mindestsenkrechtabstand zwischen den Lamellenplatten 80 bis 200 mm betragend eingestellt ist. Denkbar ist es sogar, dass er verändert werden kann oder dass er bezüglich eines aufgestellten oder aufgehängten Lamellenpaketes auch zwischen den einzelnen Lamellenplatten unterschiedlich sein kann, je nachdem, wie der Abwasserstrom mit dem Belebtschlamm geführt wird bzw. verteilt auf die einzelnen Lamellen geführt werden kann. Ein Abstand von rund 100 mm ist deshalb optimal, weil dann eine ausreichend große Zahl von Lamellenplatten einem Lamellenpaket zugeordnet werden kann und weil dennoch das Verstopfen weitgehend ausgeschlossen ist.

Unter Ausnutzung der Erkenntnis, dass die Neigung der Lamellenplatten bei ≥ 55° liegen muss, um ein sicheres Abrutschen des Belebtschlammes zu sichern, geht die Erfindung in die Richtung, dass die Bodenplatte in den Beruhigungszonen und auch die Basiswandung eine Neigung von 55 bis 70° aufweist. Damit ist gleichzeitig auch sichergestellt, dass der Belebtschlamm recht schnell und kontinuierlich in das Belebungsbecken zurückgeführt wird, weshalb die Neigung der Bodenplatte und der Basiswandung eine auch größere sein kann, als bei den Lamellenplatten. Von daher ist auch eine Größenordnung von 55 bis 70° angegeben.

Natürlich kann sich auch beim Durchfließen der Zulauföffnungen auf deren Basiswandung Schlamm absetzen. Um auch hier sicherzustellen, dass keine negativen Schlammablagerungen entstehen, ist vorgesehen, dass auch die Basiswandung auch dieser Zulauföffnungen eine Neigung in Richtung Belebungsbecken von über 55° aufweist. Sollte sich hier auch nur eine geringe Menge von Schlamm absetzen, so rutscht dieser wieder ab und wird von dem vorbei fließenden Umlaufwasser mitgenommen, wobei das Abrutschen dann auf jeden Fall sichergestellt ist, wenn die Neigung deutlich über 55° liegt.

Eine ausreichende Zahl von Lamellenplatten, d. h. also von Schlammabscheidern steht zur Verfügung, ohne dass die Bauabmessung des Belebungsbeckens wesentlich überschritten werden, wenn wie erfindungsgemäß vorgesehen die Beruhigungszone eine von der hydraulisch erforderlichen Lamellenzahl abhängige Länge aufweist. Vorteil dabei ist, dass immer nur ein bestimmter Anteil an Abwasser(Teilstrom) in den Bereich der Beruhigungszonen gelangen kann oder hineingeleitet wird, sodass auch damit ein Zusetzen der Lamellen sicher verhindert ist.

Das Belebungsbecken kann erfindungsgemäß auch rechteckig sein, wenn es mit Leitecken und Leitwänden ausgerüstet ist. Der Umlauf des Wassers ist so ungestört.

Weiter vorne ist bereits darauf hingewiesen worden, dass durch die Belüfter und auch die Rührwerke Turbulenzen im Belebungsbecken gezielt verursacht bzw. hervorgerufen werden und dadurch das Abscheiden des Belebtschlammes auf den Lamellenplatten erschwert wird. Gemäß der Erfindung wird nun vorgeschlagen, dass über die Gesamtfläche des Belebungsbeckens verteilt Belüfter angeordnet sind. Aufgrund der besonderen Anordnung der Schlammabscheider mit ihren Lamellenplatten kann der Sauerstoff bzw. kann die Luft über die Gesamtfläche verteilt eingebracht werden, ohne dass dies den Absetzeffekt negativ beeinflusst. Vielmehr ergibt sich eine bessere Belebtschlammbehandlung.

Verfahrensmäßig wird die Aufgabe dadurch gelöst, dass das intensiv mit Belebtschlamm vermischte Abwasser vor dem Passieren der Schlammabscheider in eine letztere aufnehmende und von den Belebungsbecken separierte Beruhigungszone eingeleitet und nach Passieren der Schlammabscheider als gereinigtes Abwasser abgeführt wird. Die Erfindung lehrt dementsprechend, dass zunächst einmal ein Belebungsbecken zur Verfügung gestellt wird bzw. benötigt wird, in dem das schlammhaltige Abwasser mit dem Belebtschlamm gezielt behandelt wird, um dann den Wasserstrom zu beruhigen und in diesem beruhigten Zustand durch die Schlammabscheider zu führen, sodass sich der mitgenommene Belebtschlamm gezielt auf den Lamellenplatten absetzt, von diesen abrutscht und dann über den Boden bzw. die Bodenplatte der Beruhigungszone in das Belebungsbecken zurückgeführt wird. Dort steht also immer genügend Belebungsschlamm bzw. Belebtschlamm zur Verfügung, wobei er beim Abrutschen zweckmäßig durch die Umlaufströmung mitgenommen und mit dem Umlaufwasser vermischt werden kann. Wichtig ist aber wie erwähnt, dass "beruhigtes" Abwasser in die Schlammabscheider hineingeführt wird, um ein Absetzen des Schlammes auf den Lamellenplatten sicherzustellen.

Dieses von jedweden Turbulenzen freie Strömen des mit Schlamm beladenen Abwassers wird dadurch vor allem sichergestellt, dass das mit Schlamm beladene Abwasser vom Umlaufwasser mit Belüftern und Rührwerken unbeeinflusst durch Öffnungen in der Trennwand zwischen Belebungsbecken und Beruhigungszone hindurchgeleitet und der von den Lamellenplatten abrutschende Schlamm durch entsprechende Öffnungen in den Umlaufwasserstrom zurückgeführt wird. Der abrutschende Schlamm gelangt unabhängig von dem Zustrom des schlammhaltigen Abwassers in das Belebungsbecken zurück, wo er vom Umlaufwasser mitgenommen und zur Behandlung genutzt werden kann.

In üblichen Abwasserreinigungsverfahren wird ein Trockensubstanzgehalt von 3 bis 5 g/l eingehalten, weil ansonsten bei vertretbarem Aufwand eine einwandfreie Verfahrensführung nicht möglich ist. Nach dem weiter vorn zitierten Stand der Technik konnte durch entsprechende Maßnahmen dieser Trockensubstanzgehalt auf ≥ 8 g/l erhöht werden. Die jetzige Verfahrensführung zeichnet sich dadurch aus, dass auch bei höheren Trockensubstanzgehalten im Belebungsbecken ein sicheres Absetzen des Belebtschlammes in den Schlammabscheidern wegen der nicht vorhandenen Turbulenzen gewährleistet ist, sodass damit ein besserer und schnellerer Reinigungseffekt bei geringerem Platzbedarf erreicht wird, ohne dass die Qualität des gereinigten Abwassers darunter leiden würde.

Der von den Lamellenplatten abrutschende Belebtschlamm darf und soll den Absetzeffekt zwischen den Lamellenplatten natürlich möglichst nicht oder wenn nur wenig beeinflussen. Dies wird in der Beruhigungszone dadurch sichergestellt, dass der sich auf den schräg gestellten Lamellenplatten absetzende Belebtschlamm kontinuierlich über eine Schräge in das Belebungsbecken zurückgeleitet wird. Durch diese gezielte Führung des herabrutschenden Belebtschlammes werden nachteilige Turbulenzen auch hier vermieden. Gleichzeitig wird aber auch durch diese Führung des Belebtschlammes sichergestellt, dass dieser abrutschende und in das Belebungsbecken zurückrutschende Belebtschlamm dann auch sicher vom vorbei fließenden Umlaufwasser aufgenommen und zur Belebtschlammbehandlung genutzt wird.

Die Erfindung zeichnet sich insbesondere dadurch aus, dass eine Anlage geschaffen ist, mit der organisch belastete Abwässer in einem Arbeitsgang, d. h. im Belebungsbecken soweit behandelt und für die Trennung von Belebtschlamm und gereinigtem Abwasser vorbereitet werden, dass in einem Anhang zum Belebungsbecken, nämlich in den parallel dazu angeordneten Beruhigungszonen ein von Turbulenzen völlig befreiter Abwasserstrom sich der mitgenommene Schlamm auf den Lamellenplatten absetzt und anschließend über den schräg gestellten Boden der Beruhigungszone und der Öffnungen und von dort in das Belebungsbecken zurückgelangen kann. Damit wird nicht nur ein besonders guter Abscheideeffekt sichergestellt, sondern gleichzeitig auch das Gesamtverfahren positiv beeinflusst, weil eben der abrutschende Belebtschlamm auch vom vorbei fließenden Umlaufwasser sicher wieder aufgenommen und verteilt wird. Es ergibt sich also ein Doppeleffekt mit verbessertem Abscheidegrad und mit verbessertem Behandlungserfolg im Belebungsbecken.

Weitere Einzelheiten und Vorteile der Erfindung ergeben sich aus der nachfolgenden Beschreibung der zugehörigen Zeichnungen, in denen ein bevorzugtes Ausführungsbeispiel mit den dazu notwendigen Einzelheiten und Einzelteilen dargestellt ist. Es zeigen:
- Figur 1: eine Draufsicht auf ein rechteckiges Belebungsbecken mit zugeordneter Beruhigungszone,
- Figur 2: ein rundes Belebungsbecken mit zugeordneter Beruhigungszone,
- Figur 3: einen Schnitt durch das Belebungsbecken mit zugeordneter Beruhigungszone,
- Figur 4: eine Seitenansicht dieser Situation,
- Figur 5: einen weiteren Schnitt mit einer besonderen Bodenplatte der Beruhigungszone und
- Figur 6: eine entsprechende Seitenansicht aus dem Belebungsbecken heraus gesehen.

Bei der Abwasserreinigungsanlage 1 nach Figur 1 handelt es sich um ein großes rechteckiges Belebungsbecken 2, in dem das organisch belastete Abwasser 3 so mit Belebtschlamm behandelt wird, dass über den Reinwasserablauf 4 Wasser abläuft, das entweder einer Nachklärung oder ohne weitere Behandlungsstufe in einen Vorfluter abgegeben werden kann.

Vor dem Reinwasserablauf 4 ist ein Schlammabscheider 5 mit einer Vielzahl von Lamellenplatten 6, 7, 8 angeordnet, über den eine Trennung von gereinigtem Abwasser und Belebtschlamm erfolgt, wobei das Abwasser 3 über einen Zulauf 9 in das Belebungsbecken 2 eingeleitet wird.

Parallel zum Belebungsbecken 2 und aus dem Bereich des im Umlauf geführten Abwasser/Belebtschlamm-Gemisches herausgenommen ist eine Beruhigungszone 10. In dieser Beruhigungszone 10 sind hintereinander mehrere oder auch nur ein Schlammabscheider 5 mit Lamellenplatten 6, 7, 8 angeordnet, wobei auch in der seitlichen Wand 16 zwischen Belebungsbecken 2 und Beruhigungszone 10 Öffnungen 17, 18 und Zuläufe 20 vorgesehen sind, die die Beruhigungszonen 10 mit dem eigentlichen Belebungsbecken 2 verbinden.

In den Figuren 3 und 4 sowie 5 und 6 sind diese als Schlammwasserzulauf 11 dienenden Zulauföffnungen 20 und die als Schlammrückführung 12 dienenden Öffnungen 17, 18 zu sehen. Gleichzeitig dienen die Öffnungen 17, 18 auch noch als Schlammwasserzulauf 11. Über die Zulauföffnung 20/11 wird das schlammhaltige Abwasser in die Beruhigungszonen 10 hineingeleitet, um dann durch die Schlammabscheider 5 hindurch in Richtung Reinwasserablauf 4 zu strömen. Dabei sind, wie sowohl Figur 1 wie Figur 2 zu entnehmen ist, in Längsrichtung der hintereinander angeordneten Beruhigungszonen 10 eine Vielzahl derartiger aus Lamellenpaketen 13, 14 bestehende Schlammabscheider 5 vorgesehen und über den Reinwasserablauf 4 oben miteinander verbunden, sodass das gereinigte Abwasser aller derartigen Schlammabscheider 5 über einen gemeinsamen Reinwasserablauf 4 abgeführt werden kann. Beim Durchlaufen der Schlammabscheider 5 bzw. deren Lamellenplatten 6, 7, 8 setzt sich der vom Abwasser 3 mitgenommene Belebtschlamm auf den Lamellenplatten 6, 7, 8 ab, rutscht von diesen auf die Bodenplatte 15 der Beruhigungszone 10 herunter und rutscht auf der schräg verlaufenden Bodenplatte 15 in Richtung Öffnung 17, 18 und damit in Richtung Belebungsbecken 2. Hier an der Öffnung 17, 18 wird der abrutschende Belebtschlamm vom vorbei fließenden Umlaufwasser 3 mitgenommen, sodass die Belebtschlammbehandlung gezielt weiterlaufen kann, ohne dass anderer Belebtschlamm beispielsweise aus einer Nachklärung zugeführt werden muss.

Sowohl die Basiswandung 19 der Öffnungen 17 als auch die Basiswandung 21 der Zulauföffnung 20 sind ebenfalls stark schräg gestellt, um ein Abrutschen des Belebtschlammes sicherzustellen. Die Neigung ist hier auf ≥ 55° eingestellt, um ein sicheres Abrutschen sicherzustellen.

Bei dem in Figur 1 gezeigten Belebungsbecken 2 sind in den Ecken Leitecken 23 vorgesehen und darüber hinaus davor Leitwände 24, sodass das mit Schlamm beladene Abwasser 3 gleichmäßig über den Querschnitt des Belebungsbeckens 2 verteilt rundum geleitet werden kann. Dabei passiert das mit Schlamm beladene Abwasser 3 über die Gesamtfläche verteilt angeordnete Belüfter 25 sowie Rührwerke 26, um den notwendigen Behandlungsprozess des Abwassers 3 mit dem Belebtschlamm sicherzustellen. Die Belüfter 25, 27 sind so über den Querschnitt verteilt, dass eine gleichmäßige Verteilung der Luftblasen bzw. des Sauerstoffes möglich ist, wobei nicht alle mit Luft beschickt werden müssen, sondern vielmehr soviel wie die Berechnungen es gerade ergeben. Dabei passiert das behandelte Abwasser 3' in der seitlichen Wand 16 ausgebildete Zulauföffnungen 20/11, durch die also der vorbei geführte Teilabwasserstrom in den Bereich der Beruhigungszonen 10 gelangt. Wie die Figuren 3 bis 6 zeigen, gelangt dieses Abwasser/Belebtschlamm-Gemisch bzw. das behandelte Abwasser 3' dann in die in der Beruhigungszone 10 angeordneten Lamellenpakete 13, 14 mit den Lamellenplatten 6, 7 und 8. Ohne jede Turbulenz kann dieses behandelte Abwasser 3' dann zwischen den Lamellenplatten 6, 7, 8 hindurchgeführt werden, wobei sich der gegenüber Wasser spezifisch schwerere Belebtschlamm auf den Lamellenplatten 6, 7, 8 absetzt. Dieser abgesetzte Schlamm rutscht über die schräg gestellten Lamellenplatten 6, 7, 8 auf die Bodenplatte 15, wo er gleichmäßig auf der Bodenplatte 15 abrutscht und zwar zu den Öffnungen 17, 18 in der seitlichen Wand 16. Von dort aus rutscht er selbsttätig in das Belebungsbecken 2 zurück und wird hier vom vorbei geführten Umlaufwasser 3 aufgenommen und mitgenommen.

Die Belüfter 25, 27 werden über Luftzufuhrleitungen 28 mit der notwendigen Druckluft versorgt, wobei diese dann vergleichmäßigt in das Abwasser hineingedrückt wird und den Belebtschlamm mit dem notwendigen Sauerstoff versorgt. Mit dem Belüftungssystem eingetragene Luftblasen werden an der seitlichen Wand 16 entlang geführt, ohne dass sie mit in die Beruhigungszone 10 hineingelangen können.

Die Figur 2 zeigt ein kreisrundes Belebungsbecken 2', bei dem Zulauf 9 für das Abwasser 3. Über den übrigen Bereich verteilt, sind wiederum Belüfter 25, 27 und auch Rührwerke 26, sodass den Schlammabscheidern 5 in der Beruhigungszone 10 entsprechend behandeltes Abwasser zur Verfügung gestellt werden kann.

Figur 3 zeigt einen Schnitt durch den Übergangsbereich zwischen Beruhigungszone 10 und Belebungsbecken 2, wobei deutlich wird, dass sowohl die Zulauföffnung 20 wie auch die Öffnung 17, 18 Basiswandungen 21, 19 haben, die eine entsprechende Schräge aufweisen, um das Abrutschen des Belebtschlammes zu sichern. Insbesondere die Bodenplatte 15 der Beruhigungszone 10 ist so stark geneigt, dass der von den Lamellenplatten 7, 8, 9 bzw. im Schlammabscheider 5 herabrutschende Belebtschlamm sicher wieder in das Belebungsbecken 2 gelangt.

Figur 4 zeigt eine Ansicht aus der Mitte des Belebungsbeckens 2 auf diesen in Figur 3 gezeigten Bereich. Erkennbar ist in Figur 3 und Figur 4 auch, dass im oberen Bereich des Schlammabscheiders 5 Reinwasserabläufe 4, 4' vorgesehen sind, über die das gereinigte Abwasser abfließen kann.

Das untere Ende der Beruhigungszone 10 ist in Form einer Abrutschspitze 29 ausgebildet, um wie weiter oben schon erwähnt sicherzustellen, dass der abrutschende Belebtschlamm auch sicher aus der Beruhigungszone 10 heraus in das Belebungsbecken 2 gelangt.

Im Prinzip genauso aufgebaut ist die Beruhigungszone 10 nach Figur 5, nur dass hier die Abrutschspitze 29 anders aufgestellt ist, weil hier die Bodenplatte 15 nicht geneigt ist, sondern rechtwinklig in den Boden 32 des Belebungsbeckens 2 übergeht, während das untere Ende 31 der seitlichen Wand 16 schräg gestellt ist und zwar zulaufend auf die senkrechte Wand der Beruhigungszone 10, sodass der darauf abrutschende Belebtschlamm ebenfalls durch die entsprechend ausgebildete Öffnung 18 in das Belebungsbecken 2 hinabrutscht. Sowohl bei der Ausbildung nach Figur 5 wie auch nach der nach Figur 3 ist die Öffnung 17 bzw. 18 etwas oberhalb des Bodens 32 vorgesehen, um ein Vorbeistreichen des Umlaufwassers 3 hier sicherzustellen und damit zu erreichen, dass der abgerutschte Schlamm vom Umlaufwasser auf- und mitgenommen wird. Figur 6 ist wiederum eine Ansicht von der Mitte des Belebungsbeckens 2 hergesehen, um zu verdeutlichen, wie die Öffnungen 17, 18 bzw. 20 positioniert sind.

## Patentansprüche

1. Anlage zur biologischen Abwasserreinigung in einem kreisrunden, das Abwasser-/Belebtschlammgemisch (3) im Umlauf führenden und mit Rührwerken (26) und Belüftern (25, 27) ausgerüsteten Belebungsbecken (2), wobei vor dessen Reinwasserablauf (4) ein in einer Beruhigungszone (10) hinter einer mit einer Zulauföffnung (11, 20) in Höhe der Lamellenplatten (6, 7, 8) aufweisenden Trennwand (16) und damit aus dem Bereich des im Umlauf geführten Abwasser-/Belebtschlammgemisches (3) herausgenommener Schlammabscheider (5) mit einer Vielzahl schräg gestellter
Lamellenplatten (6, 7, 8) angeordnet ist,
**dadurch gekennzeichnet,**
**dass** die Beruhigungszone (10) mit dem Schlammabscheider (5) parallel zum Belebungsbecken (2) und damit außerhalb des eigentlichen Strömungsweges des Umlaufwassers angeordnet ist, dass zusätzlich zu den in der seitlichen Trennwand (16) zum Belebungsbecken (2) ausgebildeten und für das Abwasser-/Belebtschlammgemisch (3) vorgesehenen Zulauföffnungen (11, 20) für die Rückführung des von den Lamellenplatten (6, 7, 8) abrutschenden Schlammes in den Umlaufstrom im Belebungsbecken (2) Öffnungen (17, 18) vorgesehen sind, die eine untere Basiswandung (19) aufweisen, die in die auf sie schräg zulaufende Bodenplatte (15) der Beruhigungszone (10) übergehend schräg ausgebildet ist und dass in Längsrichtung hintereinander angeordneter Beruhigungszonen (10) eine Vielzahl von Schlammabscheidern (5) vorgesehen ist, wobei jedem Schlammabscheider (5) mit Beruhigungszone (10) und Lamellenplatten (6, 7, 8) Zulauf-Öffnungen (11, 20) und Öffnungen (17, 18) für die Rückführung des Schlammes zugeordnet sind.

2. Anlage nach Anspruch 1,
**dadurch gekennzeichnet,**
**dass** die Lamellenplatten (6, 7, 8) eine Neigung von mindestens 55° aufweisend schräg gestellt sind.

3. Anlage nach einem der vorhergehenden Ansprüche,
**dadurch gekennzeichnet,**
**dass** der Mindestsenkrechtabstand zwischen den Lamellenplatten (6, 7, 8) 80 bis 200 mm betragend eingestellt ist.

4. Anlage nach einem der vorhergehenden Ansprüche,
**dadurch gekennzeichnet,**
**dass** die Bodenplatte (15) in den Beruhigungszonen (10) und auch die Basiswandung (19) eine Neigung von 55 bis 70° aufweist.

5. Anlage nach einem der vorhergehenden Ansprüche,
**dadurch gekennzeichnet,**
**dass** auch die Basiswandung (21) dieser Zulauföffnungen (20) eine Neigung in Richtung Belebungsbecken (2) von über 55° aufweist.

6. Anlage nach einem der vorhergehenden Ansprüche,
**dadurch gekennzeichnet,**
**dass** die Beruhigungszone (10) eine von der hydraulisch erforderlichen Lamellenzahl abhängige Länge aufweist.

7. Anlage nach einem der vorhergehenden Ansprüche,
**dadurch gekennzeichnet,**
**dass** die Belüfter (25) über die Gesamtfläche (30) des Belebungsbecken (2) verteilt angeordnet sind.

8. Anlage nach einem der vorhergehenden Ansprüche,
**dadurch gekennzeichnet,**
**dass** das Belebungsbecken (2) rechteckig ausgebildet und mit Leitecken (23) und Leitwänden (24) ausgerüstet ist.

## Claims

1. Plant for biological waste water cleansing in a circular aeration tank (2), which circulates the waste water / activated sludge mix (3) and is equipped with stirrers (26) and aerators (25, 27), wherein upstream from its clean water outlet (4) in a stilling area (10) downstream from a partition wall (16), which exhibits an infeed opening (11, 20) at the level of the lamella panel (6, 7, 8), and thereby removed from the region of the circulated waste water / activated sludge mix (3), is arranged a desludger (5) having a plurality of obliquely placed lamella panels (6, 7, 8),
**characterized in that**
the stilling area (10) with the desludger (5) is arranged parallel to the aeration tank (2) and thereby outside the actual flow path of the circulating water, **in that** in addition to the infeed openings (11, 20) formed in the lateral partition wall (16) to the aeration tank (2) and provided for the waste water / activated sludge mix (3), for the recycling of the sludge sliding off the lamella panels (6, 7, 8) into the circulation flow in the aeration tank (2) openings (17, 18) are provided, which exhibit a lower base wall (19), which is formed temporarily obliquely in the obliquely angled baseplate (15) of the stilling area (10), and **in that** in the longitudinal direction of stilling areas (10) arranged one behind the other a plurality of desludgers (5) is provided, wherein each desludger (5) with stilling area (10) and lamella panels (6, 7, 8) is allotted infeed openings (11, 20) and openings (17, 18) for the recycling of the sludge.

2. The plant according to Claim 1,
**characterized in that**
the lamella panels (6, 7, 8) exhibit an incline of at least 55°

3. The plant according to any one of the preceding claims,
**characterized in that**
the minimum vertical distance between the lamella panels (6, 7, 8) is adjusted to 80 to 200 mm

4. The plant according to any one of the preceding claims,
**characterized in that**
the baseplate (15) exhibits in the stilling area (10) and also the base wall (19) an incline of 55 to 70°.

5. The plant according to any one of the preceding claims,
**characterized in that**
the base wall (21) of said infeed openings (20) exhibits an incline of more than 55° in the direction of the aeration tank (2).

6. The plant according to any one of the preceding claims,
**characterized in that**
the stilling area (10) exhibits a length, which is dependant of the hydraulically necessary number of lamellae.

7. The plant according to any one of the preceding claims,
**characterized in that**
the aerators (25) are distributed over the entire area (30) of the aeration tank (2).

8. The plant according to any one of the preceding claims,
**characterized in that**
the aeration tank (2) is rectangular in shape and is equipped with guide corners (23) and guide walls (24).

## Revendications

1. Installation pour l'épuration biologique des eaux usées dans un bassin d'activation (2) circulaire conduisant le mélange eaux usées / boue activée (3) en circulation et équipé d'agitateurs (26) et d'aérateurs (25, 27), étant donné qu'est disposé en amont de sa décharge d'eau pure (4) un séparateur de boues (5) extrait dans une zone d'amortissement (10), derrière une cloison (16) présentant un orifice d'amenée (11, 20) à hauteur des plaques à lamelles (6, 7, 8), et ainsi hors de la zone du mélange eaux usées / boue activée (3) conduit en circulation, avec une pluralité de plaques à lamelles (6, 7, 8) en biais,
**caractérisée en ce que**
la zone d'amortissement (10) est disposée avec le séparateur de boues (5) parallèlement au bassin d'activation (2), et ainsi hors du trajet d'écoulement à proprement parler de l'eau de circulation, **en ce que** sont prévus, en plus des orifices d'amenée (11, 20) formés dans la cloison latérale (16) vers le bassin d'activation (2) et prévus pour le mélange eaux usées / boue activée (3) pour le recyclage de la boue glissant des plaques à lamelles (6, 7, 8) dans le courant de circulation dans le bassin d'activation (2), des orifices (17, 18) qui présentent une paroi de base inférieure (19) formée en biais dans la plaque de fond (15) de la zone d'amortissement (10), plaque de fond qui est oblique par rapport à ladite paroi de base inférieure, et **en ce que** sont prévus dans des zones d'amortissement (10) positionnées l'une derrière l'autre dans le sens longitudinal une pluralité de séparateurs de boues (5), étant donné que sont affectés à chaque séparateur de boues (5) avec zone d'amortissement (10) et plaques à lamelles (6, 7, 8) des orifices d'amenée (11, 20) et des orifices (17, 18) pour le recyclage de la boue.

2. Installation selon la revendication 1,
**caractérisée en ce que**
les plaques à lamelles (6, 7, 8) sont en biais avec une inclinaison d'au moins 55°.

3. Installation selon l'une quelconque des revendications précédentes,
**caractérisée en ce que**
l'écartement vertical minimal entre les plaques à lamelles (6, 7, 8) est réglé sur 80 à 200 millimètres.

4. Installation selon l'une quelconque des revendications précédentes,
**caractérisée en ce que**
la plaque de fond (15) dans les zones d'amortissement (10) ainsi que la paroi de base (19) présentent une inclinaison de 55 à 70°.

5. Installation selon l'une quelconque des revendications précédentes,
**caractérisée en ce que**
la paroi de base (21) de ces orifices d'amenée (20) présente aussi une inclinaison de plus de 55° en direction du bassin d'activation (2).

6. Installation selon l'une quelconque des revendications précédentes,
**caractérisée en ce que**
la zone d'amortissement (10) présente une longueur qui est fonction du nombre de lamelles hydrauliquement nécessaire.

7. Installation selon l'une quelconque des revendications précédentes,
**caractérisée en ce que**
les aérateurs (25) sont répartis sur la surface totale (30) du bassin d'activation (2).

8. Installation selon l'une quelconque des revendications précédentes,
**caractérisée en ce que**
le bassin d'activation (2) est rectangulaire est équipé de coins-guides (23) et parois-guides (24).
